# EUROPÄISCHE PATENTSCHRIFT

(11) **EP 0 374 530 B1**
(45) Veröffentlichungstag und Bekanntmachung des Hinweises auf die Patenterteilung: **14.04.1993**
(21) Anmeldenummer: 89121860.4
(22) Anmeldetag: 27.11.1989
(51) Int. Cl.: B23K 26/00

(54) **Verfahren zur Herstellung von längsnahtgeschweissten Zargen für Blechdosen und Vorrichtung zur Durchführung des Verfahrens**
Method of manufacturing longitudinally welded bodies for sheet metal cans, and device to carry out the method
Méthode de fabrication de corps de boîtes en tôle par soudage longitudinal, et son dispositif de mise en oeuvre

(30) Priorität: 21.12.1988 CH 4719/88
(43) Veröffentlichungstag der Anmeldung: 27.06.1990
(73) Patentinhaber: ELPATRONIC AG, CH-6300 Zug (CH)
(72) Erfinder: Gross, Norbert, CH-8953 Dietikon (CH)

(56) Entgegenhaltungen:
- EP-A- 0 259 651
- DE-C- 3 643 104
- US-A- 4 525 617

## Beschreibung

AUS der DE-A-33 04 717 ist es bekannt, daß bei dem Stumpfschweißen von Blechen mittels Laser durch die ungünstigen Erstarrungsbedingungen der durch konzentrierte Laserenergie gebildeten Schmelze bei hohen Schweißgeschwindigkeiten Ungänzen entstehen können. Dabei bilden sich Randkerben und perlschnurähnliche Schweißraupen an der Oberfläche der Schweißnaht, u.a. durch Turbulenzen im Schweißbad, welches schnell erstarrt, durch ein steiles Temperaturgefälle in den an die Stoßflächen angrenzenden Blechbereichen, das durch die rasche Erwärmung des Werkstoffs und rasche, ungleichmäßige Erstarrung des Schweißbades zustandekommt, und durch Schrumpfungen im Bereich der Schweißnaht wegen raschen Abkühlens derselben. Zur Erhöhung der Schweißgeschwindigkeit ist deshalb gemäß der DE-A-33 04 717 vorgesehen, die erhitzten Stoßflächen zusammenzudrücken und die Schmelze zu verformen, um die Stoßflächen zu einer Überlapp- oder Stumpfnaht zu vereinigen. Bei der Herstellung der Überlappnaht laufen zwei Bleche zwischen zwei Preßrollen V-förmig zusammen. An der Stelle, an der die Bleche zusammentreffen, liegt der Schweißpunkt, der sich mit dem Brennpunkt des fokussierten Laserstrahls deckt. Dieses bekannte Verfahren zum Herstellen einer Überlappnaht ist offenbar nur zum Verschweißen von zwei Blechen geeignet, nicht aber von nur einem zu einer Zarge einer Dose gerundeten Blech. Insofern basiert dieses bekannte Verfahren offenbar auf einem aus der US-A-4 185 185 bekannten Verfahren, welches dazu dient, zwei Blechstreifen miteinander zu verschweißen, die ebenfalls V-förmig in dem mit einem Laserstrahl beaufschlagten Schweißpunkt zusammenlaufen und anschließend durch außen angreifende Preßrollen zusammengepreßt und miteinander verschweißt werden, so daß die Schweißnaht unsichtbar bleibt. Eine unsichtbare oder glatte Schweißnaht wird bei der Herstellung von Zargen für Blechdosen stets angestrebt. Das aus der DE-A-33 04 717 bekannte Verfahren soll sich zwar auch zur Herstellung von Zargen für Blechdosen eignen, auf die wesentlichen, für eine technische Umsetzung notwendigen Prozeßbedingungen wird jedoch nicht eingegangen, so daß die notwendige Nahtqualität mit der bekannten Lehre nicht zu erreichen ist. Insbesondere ist für den Einsatz des Verfahrens zu gewährleisten, daß Zargenanfang und -ende ruckfrei die Schweißebene durchlaufen, was zu der Bedingung führt, Strahlauftreffpunkt und Walzebene räumlich zu trennen. Daher sind mit dem bekannten Verfahren Stumpfnähte herstellbar. Stumpfnähte aber versucht man bei der Herstellung von längsnahtgeschweißten Zargen für Blechdosen nach Möglichkeit zu vermeiden, weil sich grundsätzlich keine glatten Stumpfnähte herstellen lassen, die bei Blechdosen aus ästhetischen Gründen unerläßlich sind. Zum Herstellen einer Stumpfnaht sind bei dem bekannten Verfahren eine Antriebsrolle und über derselben zwei Stauchrollen erforderlich, wobei letztere in Richtung zur Stumpfnaht zusammenlaufen. Eine Pressung quer zu den aufrechten Blechstoßflächen erfolgt durch eine geneigte Anordnung der Stauchrollen. Die quergerichtete Druckkraft, die auf die Bleche ausgeübt wird, bewirkt, daß sich eine wulstnahtähnliche Schweißnaht ergibt. Auch das schließt die Anwendung des bekannten Verfahrens bei Blechdosen aus, die außen und innen möglichst glatt sein müssen.

Aus der EP-A-0 259 651 ist ein Verfahren der eingangs genannten Art bekannt, durch das eine einwandfreie Qualität der Naht auch bei hohen Schweißgeschwindigkeiten angestrebt wird. Bei diesem bekannten Laserstrahlpreßschweißverfahren werden die Ränder jeder Zarge nach dem Runden derselben in eine solche Position zueinander gebracht, daß sie - im Querschnitt gesehen - einen spitzen Winkel bilden. Die beiden Zargenränder, die auf diese Weise einen V-Spalt bilden, haben zwar einen gegenseitigen Abstand, sind jedoch nicht parallel zueinander. Parallel zueinander sind lediglich ihre Längskanten. Der fokussierte Laserstrahl wird in den Scheitel des spitzen Winkels gerichtet, um beide Flächen, die den spitzen Winkel bilden, auf eine zumindest teilweise über der Schweißtemperatur liegende Temperatur zu erwärmen, woraufhin die Zargenränder unter Bildung der Schweißnaht zusammengepreßt werden. Bei diesem bekannten Verfahren dürfte es sehr schwierig sein, das angestrebte gleichmäßige Anschmelzen beider Zargenränder zu erzielen. Es steht nämlich nur eine Blechdicke maximal zur Verfügung, die nicht durchgeschmolzen werden darf. Außerdem dürfte es ein ähnliches Phänomen wie das oben beschriebene in Form von perlschnurähnlichen Schweißraupen geben, weil Oberflächenspannungen der Schmelze bestrebt sind, diese zu Tröpfchen zu formen. Der Brennfleckdurchmesser beträgt 0,1 bis 0,15 mm, die Blechdicke beträgt 0,12 bis 0,3 mm. Der Tröpfchenradius wird hauptsächlich durch das Verhältnis der Grenzflächenspannungen bestimmt, die Blechdicke hat hier untergeordnete Bedeutung.
Problem bei der Anordnung mit spitzem Winkel der Zargenränder ist, daß der Strahlauftreffpunkt nicht in der Mitte der, zu erzeugenden Schweißnaht liebt. Das führt dazu, daß direkt ein Zargenrand aufgeschmolzen wird, was bei der Berücksichtigung des dort vorliegenden Materialdefizits zur angesprochenen Tröpfchenbildung führt. Die gebildete Schmelze befindet sich nicht im durch die Überlappung gebildeten V-Spalt, was zwangsläufig zur Benetzung der Preßwalzen, eventuellen Anschweißungen und damit zu Nahtfehlern führt.

Aufgabe der Erfindung ist es, ein Verfahren der eingangs genannten Art und eine Vorrichtung zur Durchführung dieses Verfahrens anzugeben, mit denen sich längsnahtgeschweißte Zargen für Blechdosen herstellen lassen, die auch bei höherer Schweißgeschwindigkeit Nähte einwandfreier Qualität aufweisen.

Diese Aufgabe ist erfindungsgemäß durch die in den Patentansprüchen 1 und 8 angegebenen Schritte bzw. Merkmale gelöst.

Erfindungsgemäß trifft der fokussierte Laserstrahl unter einem sehr flachen Winkel nur auf den unteren Zargenrand auf. Der obere Zargenrand wird durch Plasma erhitzt, das sich über dem durch den Laserstrahl schmelzflüssig gemachten Metall bildet. Die Bildung des Plasmas ist von Vorteil, weil ein Metalldampfplasma Laserstrahlen besser absorbiert als eine Metallschmelze. In dem Bereich, wo sich ein Plasma bildet, erzielt man daher auch einen Tiefschweißeffekt, da weniger Laserstrahlung reflektiert wird. Da der Laserstrahl nur den einen Zargenrand aufschmilzt und der dazu parallele andere Zargenrand durch das Plasma erhitzt wird, läßt sich bei dem Aufeinanderpressen der beiden Zargenränder eine kontinuierlich dichte Schweißung erzielen.

Es ist zwar bereits an sich bekannt (US-A-4 341 943), die Zargenränder einer Blechdose einander zu überlappen, das erfolgt jedoch lediglich vor der Schweißstelle, denn anschließend werden die einander überlappenden Ränder wieder auseinander- und in stumpfe gegenseitige Anlage gebracht, um schließlich in diesem Zustand verschweißt zu werden. Der fokussierte Laserstrahl trifft dabei senkrecht zur Schweißrichtung auf die stumpf aneinanderstoßenden Zargenränder auf, so daß sich bei höheren Schweißgeschwindigkeiten auch hier das Phänomen einer perlschnurähnlichen Schweißraupe an der Oberfläche der Schweißnaht ergeben dürfte.

Erfindungsgemäß dienen bei der Vorrichtung zur Durchführung de Verfahrens als Einrichtung zum Überlappen der Zargenränder eine Z-Schiene, die die überlappten Zargenränder in gegenseitigem Abstand und parallel zueinander hält, und eine den Preßrollen vorgeschaltete Zusatzrolle, welche den gegenseitigen Abstand und die Parallelität der überlappten Zargenränder in dem Bereich vor den Preßrollen aufrechterhält; und die optische Einrichtung ist so eingestellt oder einstellbar, daß der Strahl in diesem Bereich nur auf den unteren Zargenrand trifft.

Vorteilhafte Ausgestaltungen der Erfindung bilden den Gegenstand der Unteransprüche.

In der Ausgestaltung der Erfindung nach Anspruch 5 ist der gewählte Winkel Beta, der einen Wert zwischen über 10° und 15° hat, ein sogenannter Brewster-Winkel, d.h. ein Winkel, bei dem der Laserstrahl durch das zu erwärmende Metall des unteren Zargenrandes minimal reflektiert und maximal absorbiert wird.

Ein Ausführungsbeispiel der Erfindung wird im folgenden unter Bezugnahme auf die Zeichnungen näher beschrieben. Es zeigt
- Fig. 1: in perspektivischer Darstellung eine erfindungsgemäße Vorrichtung zum Herstellen von längsnahtgeschweißten Zargen für Blechdosen mit Hilfe eines fokussierten Laserstrahls, und
- Fig. 2: als Einzelheit in vergrößerter Darstellung einen Teil der Vorrichtung nach Fig. 1.

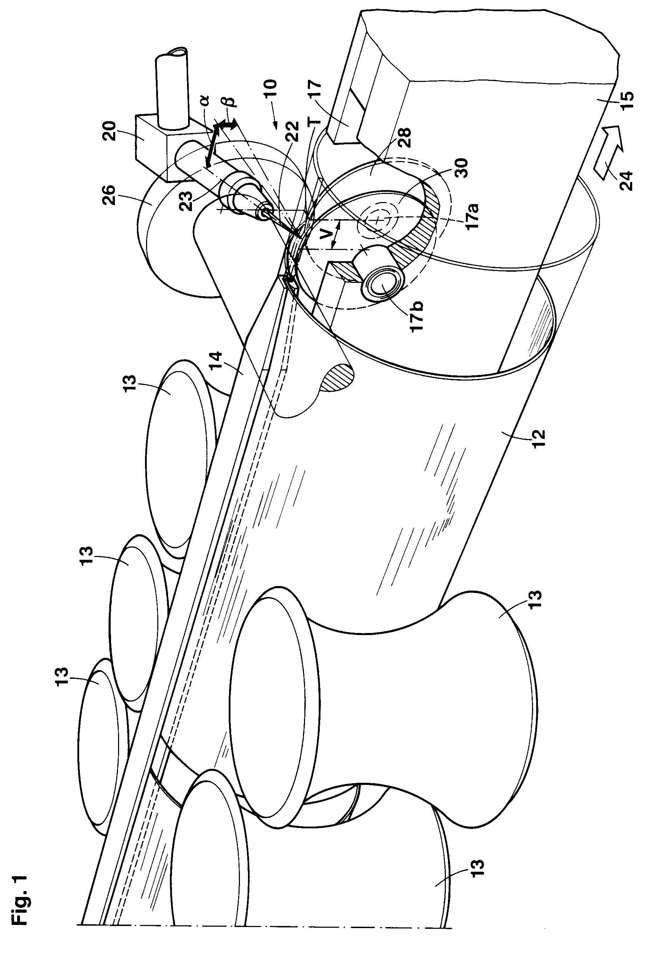

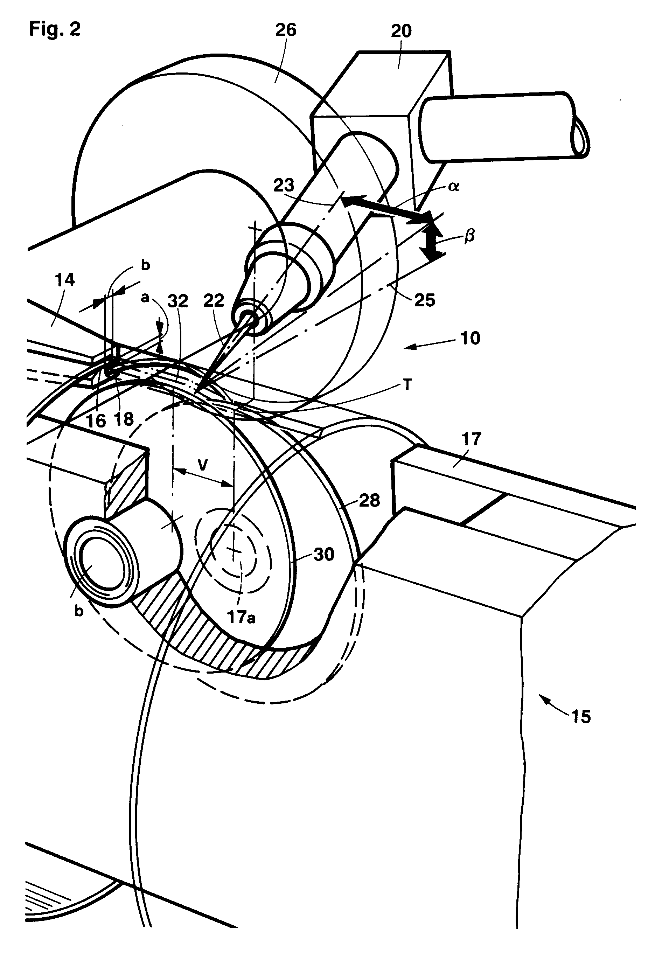

Die Fig. 1 und 2 zeigen eine insgesamt mit der Bezugszahl 10 bezeichnete Laserschweißvorrichtung zum Längsnahtschweißen von Zargen 12 für Blechdosen. Die Zargen 12 werden in einer nicht dargestellten Einrichtung gerundet und in eine Z-Schiene 14 eingeführt, in welcher sie mittels profilierter Rollen 13 vorwärts bewegt werden. Eine Z-Schiene dieser Art ist beispielsweise aus der eingangs erwähnten US-A-4 341 943 bekannt. Unterschiedlich gegenüber der bekannten Z-Schiene ist, daß die Z-Schiene 14 an ihrem Auslaßende die gerundeten Zargen mit sich überlappenden Zargenrändern 16, 18 abgibt, wie es am besten in Fig. 2 zu erkennen ist. Die Z-Schiene 14 ist also an ihrem Auslaßende im Querschnitt etwa so ausgebildet, wie es in Fig. 6 der US-A-4 341 943 gezeigt ist. Zusätzlich dazu ist bei der hier beschriebenen Laserschweißvorrichtung 10 die Z-Schiene 14 einstellbar, damit der gegenseitige Abstand a der Zargenränder 16, 18 und die Breite b von deren Überlappung eingestellt werden können, was weiter unten noch näher beschrieben ist.

An das Auslaßende der Z-Schiene 14 schließt sich eine optische Einrichtung 20 an, die in den hier beschriebenen Beispiel einen fokussierten Laserstrahl 22 liefert. Allgemein kann für das hier beschriebene Längsnahtpreßschweißen aber jede Art von energiereichem Strahl eingesetzt werden, der in der Lage ist, den Zargenrand, auf den er gerichtet wird, auf eine Temperatur oberhalb der Schweißtemperatur zu erwärmen.

Weiter folgt in Schweißrichtung, die durch einen Pfeil 24 (Fig. 1) angedeutet ist, ein Preßrollenpaar 26, 28 mit einer vorgeschalteten Zusatzrolle 30. Ein Unterarm 15 der Laserschweißvorrichtung, von welchem in den Figuren nur das rechte Ende dargestellt ist, hat eine Aussparung 17 zumindest in dem in Schweißrichtung an die Z-Schiene 14 anschließenden Bereich der Laserschweißvorrichtung. In der Aussparung 17 sind die Preßrolle 28 und die Zusatzrolle 30 jeweils auf ihrer nach außen weisenden Seite mittels Bolzen 17a bzw. 17b einseitig drehbar gelagert. Bei angenommenen gleichen Durchmessern der Rollen 28, 30 ist der Bolzen 17b entgegengesetzt zur Schweißrichtung 24 und aufwärts in zur Schweißrichtung 24 rechtwinkeliger Richtung etwas näher bei dem Auslaß der Z-Schiene 14 angeordnet als der Bolzen 17a. Diese Versetzung der Zusatzrolle 30 nach hinten und nach oben bezüglich der Preßrolle 28 ist in den Figuren ohne weiteres zu erkennen. Die Rückversetzung ist in Fig. 2 mit V bezeichnet. Die Versetzung der Rolle 30 gegenüber der Rolle 28 nach oben ist so groß wie der Abstand von der Unterseite des Zargenrandes 18 bis zur Unterseite des Zargenrandes 16. Eine Tangente an den Umfang der Preßrolle 28 in einem Punkt T führt horizontal zur Unterseite des Zargenrandes 18 an dem Auslaß der Z-Schiene 14. Der untere Zargenrand 18 bewegt sich also horizontal aus der Z-Schiene 14 heraus und auf den Umfang der Preßrolle 28 in dem Punkt T, ohne seine Richtung nach oben oder unten zu verändern.

Dagegen bewegt sich die Unterseite des oberen Zargenrandes 16 auf den oberen Umfang der Zusatzrolle 30 und von da aus dann zunehmend abwärts, um im Bereich des Punktes T zwischen den Preßrollen 26, 28 auf den unteren Zargenrand 18 gepreßt zu werden. Zwischen dem Auslaß der Z-Schiene 14 und dem Punkt T trifft der Laserstrahl 22 wie dargestellt in dem Überlappungsbereich 32, in welchem die von dem Auslaß der Z-Schiene 14 bis zu dem Punkt T konvergierenden Zargenränder 16 und 18 noch gegenseitigen Abstand haben, auf die Oberseite des unteren Zargenrandes 18. Quer zur Schweißrichtung 24 werden die Zargenränder 16, 18, obgleich sie in Richtung zu dem Punkt T konvergieren, parallel zueinander gehalten. Der gegenseitige Abstand a der zueinander parallelen Zargenränder 16, 18 wird durch die Einstellung der Z-Schiene 14 festgelegt. Durch den Laserstrahl 22 wird der untere Zargenrand 18 an seiner Oberfläche schmelzflüssig gemacht, wobei der obere Zargenrand 16 an seiner Unterseite durch Strahlungswärme und Wärmeübertragung im Plasma mit erwärmt wird. Der gegenseitige Abstand der Preßrollen 26, 28 ist ebenfalls einstellbar, damit die aufeinandergepreßten Zargenränder 16, 18 nach ihrem gegenseitigen Verschweißen eine Gesamtdicke haben, die nicht oder nur geringfüfig größer als etwas die einfache Blechdicke der Zarge 12 ist. Die Dicke der oberen Preßrolle 26 ist mindestens so groß wie die Dicken der Rollen 28, 30 zusammen genommen.

Wichtig für das hier beschriebene Längsnahtpreßschweißen der Zargen 12 sind das Aufrechterhalten der Überlappungsbreite und des gegenseitigen Abstands der Zargenränder 16, 18 in dem Bereich 32 und ein Winkel Beta, unter welchem der Laserstrahl 22 in dem Bereich 32 auf den unteren Zargenrand 18 auftrifft, weshalb das nun näher erläutert wird.

Oben ist bereits dargelegt worden, daß die Zargenränder 16, 18 in dem Bereich 32 an der Stelle, wo der Laserstrahl 22 auf die Zarge 12 gerichtet wird, einander so überlappt werden, daß sie gegenseitigen Abstand haben und parallel zueinander sind und daß der Laserstrahl 22 in diesem Überlappungsbereich nur auf den unteren Zargenrand 18 gerichtet wird. Der Winkel Beta zwischen der Strahlachse 23 und einer zu dem unteren Zargenrand 18 tangentialen Ebene 25, unter dem der Laserstrahl 22 auf den unteren Zargenrand 18 auftrifft, kann einen Wert zwischen über 10° und unter 90° haben. Vorzugsweise hat der Winkel Beta einen Wert zwischen 10° und 15°, da sich unter diesem Winkel minimale Reflexion und maximale Absorption des Laserstrahls 22 ergeben und der zu dem unteren Zargenrand 18 parallele obere Zargenrand 16 an seiner Unterseite durch ein Plasma erhitzt wird, welches sich über dem Brennfleck bildet, den der Laserstrahl 22 auf dem unteren Zargenrand bildet und in dessen Bereich der untere Zargenrand aufschmilzt. Über die Zusatzrolle 30 und bis zum Erreichen der Preßrollen 26, 28 kühlen die Zargenränder 16, 18 zwar etwas ab, bleiben jedoch ausreichend schmelzflüssig bzw. erhitzt, um eine durchgehend dichte gegenseitige Verschweißung zu ermöglichen.

Zwischen der Schweißrichtung 24 und einer senkrechten Projektion der Strahlachse 23 auf die zu dem unteren Zargenrand 18 tangentiale Ebene 25 wird ein weiterer Winkel,Alpha,von 5° bis 90° gebildet (Fig. 2), der ebenfalls nach Bedarf auf den optimalen Wert einstellbar ist.

Die Zargenränder 16, 18 werden in dem Bereich 32 um eine Strecke überlappt, die das 1- bis 3-fache des Durchmessers des Brennflecks des Laserstrahls 22 auf dem unteren Zargenrand 18 beträgt. Im Bereich des Brennflecks, d.h. in dem Bereich 32 werden die Zargenränder 16, 18 in einem gegenseitigen Abstand gehalten, der das 1- bis 5-fache des Durchmessers des Brennflecks des Strahls 22 beträgt.

In dem hier beschriebenen Ausführungsbeispiel wird die erforderliche Relativgeschwindigkeit zwischen Zarge 12 und Laserstrahl 22 durch Bewegen der Zargen 12 mit Hilfe einer nicht dargestellten Transporteinrichtung bewirkt.

## Patentansprüche

1. Verfahren zur Herstellung von mit Hilfe eines energiereichen Strahls, insbesondere eines fokussierten Laserstrahls (22), längsnahtgeschweißten Zargen (12) für Blechdosen, wobei
- die Ränder (16, 18) jeder Zarge (12) nach dem Runden derselben einander überlappt werden,
- zwischen Strahl (22) und Zarge (12) in Schweißrichtung eine Relativbewegung erzeugt wird,
- der Strahl (22) in dem Überlappungsbereich unter einem bestimmten Winkel (Beta) auf die Zarge (12) gerichtet wird, um diese auf eine Temperatur oberhalb der Schweißtemperatur zu erwärmen,
- die zu verschweißenden Zargenränder (16, 18) zum Bilden der Längsnaht aufeinandergepreßt werden, und
- die Zargenränder (16, 18) so einander überlappt werden, daß sie in dem Bereich (32), wo der Strahl (22) auf die Zarge (12) gerichtet wird, gegenseitigen Abstand haben,
**dadurch gekennzeichnet,** daß die Zargenränder (16, 18) in dem Bereich (32), wo der Strahl (22) auf die Zarge (12) gerichtet wird, parallel zueinander sind und daß der Strahl (22) in diesem Bereich nur auf den unteren Zargenrand (18) gerichtet und der obere Zargenrand (16) durch Plasma erhitzt wird, das sich über dem durch den Laserstrahl (22) schmelzflüssig gemachten Metall bildet.

2. Verfahren nach Anspruch 1, dadurch gekennzeichnet, daß die Zargenränder (16, 18) um eine Strecke (b) überlappt werden, die das 1- bis 3-fache des Durchmessers des Brennflecks des Strahls (22) auf dem unteren Zargenrand (18) beträgt.

3. Verfahren nach Anspruch 2, dadurch gekennzeichnet, daß die Zargenränder (16, 18) im Bereich des Brennflecks auf einen gegenseitigen Abstand (a) gebracht werden, der das 1- bis 5-fache des Durchmessers des Brennflecks des Strahls (22) beträgt.

4. Verfahren nach einem der Ansprüche 1 bis 3, dadurch gekennzeichnet, daß der bestimmte Winkel (Beta), unter dem der Strahl (22) auf den unteren Zargenrand (18) gerichtet wird, zwischen der Strahlachse (23) und einer zu dem unteren Zargenrand (18) tangentialen Ebene (25) mit einem Wert zwischen über 10° und unter 90° gebildet wird.

5. Verfahren nach Anspruch 4, dadurch gekennzeichnet, daß für den Winkel (Beta) ein Wert zwischen über 10° und 15° gewählt wird.

6. Verfahren nach einem der Ansprüche 1 bis 5, dadurch gekennzeichnet, daß zwischen der Schweißrichtung (24) und einer senkrechten Projektion der Strahlachse (23) auf eine zu dem unteren Zargenrand tangentiale Ebene (25) ein weiterer Winkel (Alpha) von 5° bis 90° gebildet wird.

7. Verfahren nach einem der Ansprüche 1 bis 6, dadurch gekennzeichnet, daß die Überlappung und der Abstand der Zargenränder (16, 18) mit Hilfe einer einstellbaren Z-Schiene (14) erzeugt werden.

8. Vorrichtung zur Durchführung des Verfahrens nach einem der Ansprüche 1 bis 7, mit einer Einrichtung zum Runden der Zargen, einer Einrichtung zum Überlappen der Zargen, einer optischen Einrichtung zum Liefern eines energiereichen Strahls, insbesondere eines fokussierten Laserstrahls, wenigstens einem Paar Preßrollen zum Aufeinanderpressen der Zargenränder, und einer Einrichtung zum Erzeugen einer Relativbewegung zwischen Zarge und Strahl,
**dadurch gekennzeichnet**, daß als Einrichtung zum Überlappen der Zargenränder eine Z-Schiene (14), die die überlappten Zargenränder (16, 18) in gegenseitigem Abstand und parallel zueinander hält, und eine den Preßrollen (26, 28) vorgeschaltete Zusatzrolle (30), welche den gegenseitigen Abstand und die Parallelität der überlappten Zargenränder (16, 18) in dem Bereich (32) vor den Preßrollen (26, 28) aufrechterhält, dienen, und daß die optische Einrichtung (20) so eingestellt ist, daß der Strahl (22) in diesem Bereich (32) nur auf den unteren Zargenrand (18) trifft.

9. Vorrichtung nach Anspruch 8, dadurch gekennzeichnet, daß der gegenseitige Abstand der Preßrollen (26, 28) zum Einstellen des Preßspalts auf einen Wert, der kleiner als die oder gleich der Blechdicke der Zargen (12) ist, einstellbar ist.

10. Vorrichtung nach Anspruch 8 oder 9, dadurch gekennzeichnet, daß die Z-Schiene (14) zur Bildung der Überlappung und des gegenseitigen Abstands der Zargenränder (16, 18) einstellbar ist.

## Claims

1. Method of producing longitudinal-seam-welded bodies (12) for tin cans by means of a high-energy beam, particularly a focused laser beam (22), wherein
- after the body has been rounded, the edges (16, 18) of each body (12) are overlapped,
- a relative movement in the welding direction is produced between the beam (22) and the body (12),
- the beam (22) is directed onto the can body (12) in the area of overlap at a given angle (beta) in order to heat it to a temperature above the welding temperature,
- the body edges (16, 18) to be welded together are pressed one onto the other to form the longitudinal seam, and
- the body edges (16, 18) are overlapped in such a way that they are mutually spaced apart in the region (32) where the beam (22) is directed onto the body (12),
characterised in that the body edges (16, 18) are parallel to one another in the region (32) where the beam (22) is directed onto the body (12), and that in this region the beam (22) is directed only onto the lower edge (18) of the body and the upper edge (16) is heated by plasma which forms above the metal made molten by the laser beam (22).

2. Method according to claim 1, characterised in that the edges (16, 18) of the body are overlapped by a distance (b) that is 1 to 3 times the diameter of the focal spot of the beam (22) on the lower edge (18) of the body.

3. Method according to claim 2, characterised in that, in the region of the focal spot, the body edges (16, 18) have a mutual spacing (a) that is 1 to 5 times the diameter of the focal spot of the beam (22).

4. Method according to any of claims 1 to 3, characterised in that the specific angle (beta) at which the beam (22) is directed onto the lower edge (18) of the body is formed with a value between above 10° and below 90° between the axis (23) of the beam and a plane (25) tangential to the lower edge (18) of the body.

5. Method according to claim 4, characterised in that a value between above 10° and 15° is selected for the angle (beta).

6. Method according to any of claims 1 to 5, characterised in that a further angle (alpha) of 5° to 90° is formed between the welding direction (24) and a perpendicular projection of the beam axis (23) onto a plane (25) tangential to the lower edge of the body.

7. Method according to any of claims 1 to 6, characterised in that the overlapping and the spacing of the body edges (16, 18) are produced by means of an adjustable Z-rail (14).

8. Apparatus for carrying out the method according to any of claims 1 to 7, having a device for rounding the bodies, a device for overlapping the bodies, an optical device for supplying a high-energy beam, particularly a focused laser beam, at least one pair of pressing rollers for pressing the edges of the body onto one another, and a device for producing a relative movement of the body and the beam, characterised in that a Z-rail (14), which holds the overlapped edges (16, 18) of the body spaced apart from and parallel to one another, and an auxiliary roller (30), which precedes the pressing rollers (26, 28) and maintains the mutual spacing and the parallelism of the overlapped edges (16, 18) of the body in the region (32) ahead of the pressing rollers (26, 28), serve as the device for overlapping the edges of the body, and that the optical device (20) is so adjusted that in this region (32) the beam (22) impinges only on the lower edge (18) of the body.

9. Apparatus according to claim 8, characterised in that the mutual spacing of the pressing rollers (26, 28) is adjustable in order to set the pressing gap to a value less than or equal to the thickness of the sheet metal of the bodies (12).

10. Apparatus according to claim 8 or 9, characterised in that the Z-rail (14) is adjustable in order to form the overlap and mutual spacing of the body edges (16, 18).

## Revendications

1. Procédé pour la fabrication de corps (12) de boîtes pour boîtes métalliques, à l'aide d'un rayon de haute énergie, notamment d'un rayon laser focalisé, dans lequel
- les bords (16, 18) de chaque corps (12) de boîte se recouvrent après l'arrondissement de celui-ci,
- l'on crée un mouvement relatif dans le sens du soudage entre le rayon (22) et le corps (12) de boîte,
- le rayon (22) est dirigé sur le corps (12) de boîte, dans la zone de recouvrement selon un angle défini (bêta), de manière à chauffer cette zone jusqu'à une température supérieure à la température de soudage,
- les bords (16, 18) du corps de boîte à souder sont comprimés l'un sur l'autre en vue de former une soudure longitudinale, et dans lequel
- les bords (16, 18) du corps de boîte se recouvrent de manière telle qu'au niveau de la zone (32), dans laquelle le rayon (22) est dirigé sur eux, les bords soient espacés l'un de l'autre,
caractérisé en ce qu'au niveau de la zone (32), dans laquelle le rayon (22) est dirigé sur le corps (12) de boîte, les bords (16, 18) du corps de boîte sont parallèles l'un à l'autre, et en ce que le rayon (22) n'est dirige, dans cette zone, que sur le bord inférieur (18) du corps de boîte, et en ce que le bord supérieur (16) du corps de boîte est chauffé par le plasma qui se forme au-dessus du métal liquéfié par le rayon laser (22).

2. Procédé selon la revendication 1, caractérisé en ce que les bords (16, 18) du corps de boîte se recouvrent d'une distance (b) qui réprésente 1 à 3 fois le diamètre du foyer du rayon (22) sur le bord inférieur (18) du corps de boîte.

3. Procédé selon la revendication 2, caractérisé en ce qu'à proximité du foyer, les bords (16, 18) du corps de boîte sont réglés à une distance (a) l'un de l'autre, qui représente 1 à 5 fois le diamètre du foyer du rayon (22).

4. Procédé selon l'une des revendications 1 à 3, caractérisé en ce que l'angle défini (bêta) sous lequel le rayon (22) est dirigé sur le bord inférieur (18) du corps de boîte, est formé entre l'axe (23) du rayon et un plan (25) qui est tangent au bord inférieur (18) du corps de boîte, représentant une valeur comprise entre un angle supérieur à 10° et un angle inférieur à 90°.

5. Procédé selon la revendication 4, caractérisé en ce que l'on choisit un angle (bêta) d'une valeur comprise entre un angle supérieur à 10° et 15°.

6. Procédé selon l'une des revendications 1 à 5, caractérisé en ce qu'un autre angle (alpha) compris entre 5° et 90° est formé entre le sens (24) de soudage et une projection verticale de l'axe (23) du rayon sur le plan (25) qui est tangent au bord inférieur du corps de boîte.

7. Procédé selon l'une des revendications 1 à 6, caractérisé en ce que le recouvrement et l'écartement des bords (16, 18) du corps de boîte sont créés à l'aide d'un rail Z réglable (14).

8. Dispositif permettant la mise en oeuvre du procédé selon l'une des revendications 1 à 7, comprenant un dispositif d'arrondissement des corps de boîte, un dispositif de chevauchement des corps de boîte, un dispositif optique destiné à produire un rayon de haute énergie, notamment un rayon laser focalisé, au moins une paire de galets de pression destinés à comprimer les bords du corps de boîte l'un sur l'autre, et un dispositif destiné à créer un mouvement relatif entre le corps de boîte et le rayon,
caractérisé en ce que le dispositif de chevauchement des bords du corps de boîte est constitué d'un rail Z (14) qui maintient les bords (16, 18) du corps de boîte à une certaine distance l'un de l'autre et parallèlement l'un à l'autre, et d'un galet supplémentaire (30) précédant les galets (26, 28) de pression, qui maintient l'écartement et le parallélisme des bords chevauchés (16, 18) du corps de boîte au niveau de la zone (32) située en amont des galets (26, 28) de pression, et en ce que le dispositif optique (20) est réglé de manière telle que le rayon (22) ne frappe, dans cette zone (32), que le bord inférieur (18) du corps de boîte.

9. Dispositif selon la revendication 8, caractérisé en ce que l'écartement entre les galets (26, 28) de pression est réglable de manière à adjuster la fente de compression à une valeur qui est inférieure ou égale à l'épaisseur de la tôle des corps (12) de boîte.

10. Dispositif selon l'une des revendications 8 ou 9, caractérisé en ce que le rail Z (14) est réglable de manière à créer le chevauchement et l'écartement des bords (16, 18) du corps de boîte.
